# EUROPEAN PATENT APPLICATION

(11) **EP 4 390 366 A1**
(43) Date of publication of application: **26.06.2024**
(21) Application number: 22383273.4
(22) Date of filing: 23.12.2022
(51) Int. Cl.: G01N 15/08

(54) **DEVICE AND METHOD FOR TESTING PERMEABILITY OF MATERIALS**

(71) Applicant: Airbus Operations, S.L.U., 28906 Getafe (Madrid) (ES)
(72) Inventor: VÁZQUEZ CASTRO, Jesús Javier, Getafe (ES); CALERO CASANOVA, Álvaro, Getafe (ES); SUDEROW, Hermann, Madrid (ES); HERRERA, Edwin, Madrid (ES); CASTILLA, Jose María, Madrid (ES); DELGADO LABRANDERO, Sofía, Getafe (ES); ALVAREZ MONTOYA, Rafael, Madrid (ES); GONZALO MIGUEL, Eduardo, Getafe (ES)
(74) Representative: Elzaburu S.L.P.

(57) **Abstract**

Device and method for testing permeability of materials, the device comprising:
- a plurality of inlets (20) connected to a pressurized Helium source (1),
- a plurality of chambers (2), each chamber (2) receiving a specimen (100) of a material to be tested, split by the specimen (100) into an upstream part (2.1) and a downstream part (2.2), each chamber (2) being in fluid communication with an inlet (20) such that pressurized Helium from the Helium source (1) enters the upstream part (2.1) of each chamber (2),
- a vacuum device (4), in fluid communication with each chamber (2) of the plurality of chambers (2) and providing vacuum to the downstream part (2.2) of each chamber (2),
- a Helium detector (3), in fluid communication with each chamber (2) of the plurality of chambers (2) and detecting Helium in the downstream part (2.2) of the plurality of chambers (2).

## Description

### FIELD OF THE INVENTION

The invention relates to the field of permeability testing to characterize the permeability behavior of multiple specimens at the same time.

### BACKGROUND OF THE INVENTION

Due to environmental reasons, challenges to reduce the use of fossil fuels must be increasingly faced. In this scenario, hydrogen produced on the basis of renewable energy is a reasonable candidate for efficient energy supply. Its high energy density makes it an emerging alternative fuel for aircraft applications.

In particular, hydrogen is an attractive fuel for high-altitude short-medium range aircraft because it contains about 6.2 times the energy per kilogram as compared with traditional hydrocarbon fuels. Therefore, in aircraft applications, said high specific energy of hydrogen may be a key enabler. However, practical considerations have largely prevented its use. While the specific energy of hydrogen is very high, the energy per unit volume is comparatively low. Liquid hydrogen enhances its energy density relative to gaseous form while allowing to reduce the mass of the tank required to confine the hydrogen within as a result of the lower pressure in liquid state. Liquid hydrogen at 20 K and 1 bar pressure has a density of 70 g/l compared to the 40 g/l of gaseous hydrogen at 88 K and 700 bar. Only cryo-compressed hydrogen has a higher density, with a value of 80 g/l at 38 K and 300 bar. According to these parameters, liquefied cryogenic form allows efficient storage at low pressure.

In this regard, liquid hydrogen (LH2) cryotanks are one of the key components of the structure of future generations of heavy lift launch vehicles, space exploration structures and new green aircraft. It is in aircraft where the greatest challenges lie in developing hydrogen storage systems as a result of the need for reduced weight in combination with good insulating and permeation properties. Known cryotanks are made either of composite or metallic material. A composite cryotank can offer significant weight reduction compared to a metallic solution.

Tightness is a critical factor in the application of composite materials to liquid hydrogen (LH2) tanks, in particular to vacuum insulated tanks. Tightness includes resistance to permeation, leakage or outgassing.

Permeation is the phenomenon by which a gas can pass through a material. In the presence of a difference of molecular concentration of gas between two opposite faces of a material, a random path through molecular size pores in the material may give rise to a flow of gas between the two faces, towards the low gas concentration, bymolecular diffusion.

The resulting gas flow might lead to a loss of vacuum inside the vacuum enclosure and a concomitant increase of the thermal transfer on the cryogenic liquid hydrogen (LH2) container. What is required is that the thermal conductivity is low enough so that there is no heat transfer from the outside which could cause evaporation of liquid hydrogen (LH2). The evaporation may lead to an increased consumption of liquid hydrogen (LH2) fuel due to the need to evacuate the gas and may potentially lead to increased pressure in the liquid hydrogen (LH2) container because the volume of hydrogen gas is much larger than in the liquid state.

Accordingly, it is of utmost importance to characterize the permeability values of different materials, specifically composite materials, in order to compare their tightness resulting from different technological choices, such as for example materials, stacking sequences or ply thickness.

The flow of a gas through a material can be measured using a variety of methods.

Among these, the Helium leak detection is the most sensitive method and allows detecting a flow through extremely small pores in the material. This method uses Helium gas, which is the gas that is considered to have highest penetration and diffusion in all materials, because of the absence of Van der Waals interactions and chemical activity. Helium is applied on one side of a tested specimen and the other side is emptied using a vacuum pump. The residual gas in the vacuum enclosure is directed to a mass spectrometer using a pump. The spectrometer is adjusted to detect Helium atoms. The spectrometer is very sensitive and can detect even extremely small variations in the Helium gas concentration of the residual gas in the vacuum enclosure. When the Helium leaks or permeates through the specimen, the increase in Helium concentration in the residual gas of the vacuum enclosure is detected, far before any measurable pressure increase can be observed in the vacuum enclosure.

It is usually easy and quick to detect a crack that penetrates over the entire thickness of the material using Helium leak detection. However, if the flow of gas is due to molecular diffusion, the gas flow can only be determined accurately after the gas diffuses through the thickness of the material. In composite and plastic materials with the thickness required in cryotanks applications, the diffusion process may last for many days. The measurement can only be made after the gas has flowed through the whole thickness, often lasting three to four days. This, together with the usually very small values of gas flow, make it often difficult to reach conclusive results about the suitability of a material for applications requiring tightness. For this reason, permeability testing is time consuming and represent important constraints and costs, in particular when various materials are to be tested.

Measurements of permeability of single specimens have been performed in a number of systems in the past. These measurements have been carried out on individual specimens.

There are also numerous test methods to measure permeability in rocks and other porous materials, mostly using pressure increases. These methods are less sensitive than Helium detection. These methods are also usually made on individual test specimens.

### SUMMARY OF THE INVENTION

This invention addresses the problem of developing a method to significantly reduce time, resources and costs of a test campaign required to obtain measurements of permeability on a set of many different materials, for instance, composite materials.

The object of the invention is a device for testing permeability of materials, comprising:
- a plurality of inlets adapted to be connected to a pressurized Helium source,
- a plurality of chambers, each chamber adapted to receive a specimen of a material to be tested, the chamber adapted to be split by the specimen into at least an upstream part and a downstream part, each chamber of the plurality of chambers being in fluid communication with an inlet of the plurality of inlets such that pressurized Helium from the Helium source is able to enter the upstream part of the chamber of the plurality of chambers,
- a vacuum device, in fluid communication with each chamber of the plurality of chambers and configured to provide vacuum to the downstream part of each chamber of the plurality of chambers,
- a Helium detector, in fluid communication with each chamber of the plurality of chambers and configured to detect Helium in the downstream part of the plurality of chambers.

The upstream part of the chamber refers to the part towards the Helium (He) source. It is therefore a chamber part in fluid communication with the Helium (He) source and with a first side of the specimen. The downstream part of the chamber is the part located after the specimen with respect to the flow direction of the Helium (He) gas. Therefore, it is the part of the chamber in fluid communication with the Helium (He) detector and with the second opposite side of the specimen.

Thus, a pressurized Helium (He) source, for instance a container, is connected to one side of each specimen through, for instance, a high-pressure line. On the other side, each specimen is connected to the vacuum system, for instance through a valve. This second side of the specimen is also connected to the Helium (He) detector.

In fluid communication is to be interpreted as a connection between elements that can convey a fluid, in this application a gas.

Accordingly, a device for parallel measurement of Helium (He) leaks in different specimens is disclosed.

According to the above, the invention presents the following advantages:
- Several permeability tests can be performed simultaneously.
- Only a single Helium detector is used for measurement on n specimens. It implies a reduction of space, laboratory equipment and costs.
- Almost the same amount of Helium is used as when testing a single specimen. The total amount of Helium is very similar, as the Helium leakage is negligible compared to the amount of Helium source.

A method for testing permeability of materials is also an object of the present invention, the method comprising the following steps:
- providing a pressurized Helium source, for instance, a container,
- connecting the pressurized Helium source to a plurality of inlets of a device for testing permeability of materials, the device further comprising a plurality of chambers, each chamber adapted to receive a specimen of a material to be tested, the specimen configured to split the chamber into at least an upstream part and a downstream part, each chamber of the plurality of chambers being in fluid communication with one inlet adapted to be connected to the pressurized Helium source such that pressurized Helium from the Helium source is able to enter the upstream part of the chamber of the plurality of chambers,
- providing a vacuum device, in fluid communication with each chamber of the plurality of chambers and configured to provide vacuum to the downstream part of each chamber of the plurality of chambers,
- providing a Helium detector, in fluid communication with each chamber of the plurality of chambers and configured to detect Helium in the downstream part of the chamber,
- inserting a number of specimens in a number of chambers,
   the method further comprising the following sub-steps:
   ∘ applying vacuum to at least one chamber of the plurality of chambers by the vacuum device,
   ∘ putting in fluid communication said chamber with the Helium detector, and
   ∘ making a measurement with the Helium detector,
- repeating the above sub-steps after a period of time over each of the specimens.

According to the above, in terms of leak rate measurement, vacuum is sequentially applied to each specimen.

In an embodiment, the process may be automatized and repeated for instance every thirty minutes until the leak rate of each specimen does no longer vary significantly with time. It may occur after four days.

In another embodiment, using manual operation, the leak rate can be monitored, for instance, four times during a working day.

Given that the complete test of a specimen takes days, the testing of two hundred specimens, one by one, would take at least three years of testing. Alternatively, as Helium leak detectors, for instance, spectrometers, are expensive, testing two hundred specimens in parallel would be costly because of the price and laboratory space of so many spectrometers.

The claimed invention solves the above drawbacks by using a single spectrometer, potentially for dozens or hundreds of specimen tests. Indeed, according to the invention, because the duration of the tests takes days, the measurement made on each specimen does not need to be simultaneous on each specimen and can be sequentially shifted in time.

### DESCRIPTION OF THE FIGURES

To complete the description and to provide for a better understanding of the invention, a set of drawings is provided. Said drawings form an integral part of the description and illustrate preferred embodiments of the invention. The drawings comprise the following figures.
Figure 1 shows a schematic diagram showing the different elements of an embodiment of the device object of the invention.
Figure 2 shows a schematic lateral view of an embodiment of a vacuum chamber having eight connections for eight chambers.
Figure 3 shows a schematic perspective view of the embodiment of figure 2 with several specimens.
Figure 4 shows a schematic perspective view of the embodiment of the chambers of figure 3.
Figure 5 shows an illustration of how the measurements are made one after another on different specimens placed in the same device.

### DETAILED DESCRIPTION OF THE INVENTION

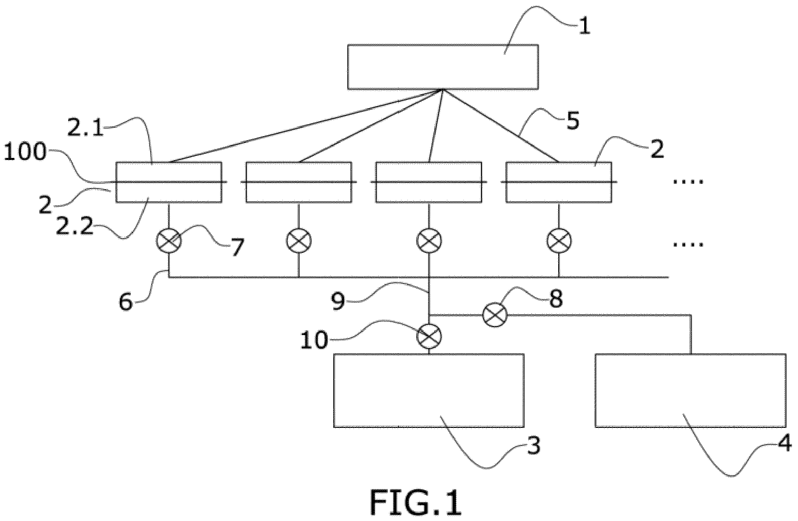

Figure 1 discloses a schematic diagram of a device of the invention comprising:
- a pressurized Helium source (1), for instance, a container,
- n number of chambers (2), each chamber (2) adapted to receive a specimen (100) of a material, for instance a composite material, to be tested. Each chamber (2) of the n number of chambers (2) is in fluid communication with the pressurized Helium source (1). Each chamber (2) is split by the specimen (100) into an upstream part (2.1) and a downstream part (2.2),
- a vacuum device (4), in fluid communication with each chamber (2) of the n number of chambers (2),
- a Helium detector (3), in fluid communication with each chamber (2) of the n number of chambers (2).

In the shown embodiment, the device comprises a plurality of valves (7). Each valve (7) is in fluid communication with a chamber (2). Each valve (7) is configured to open or close a fluid communication of a downstream part (2.2) of a chamber (2) of the plurality of chambers (2) with the Helium detector (3). The n valves (7) allow to choose which specimen(s) are going to be tested.

In the embodiment disclosed in figure 1, the device object of the invention comprises a set of vacuum lines (6). A vacuum line is a line, or pipe, able to transmit vacuum. Each vacuum line (6) departs from each chamber (2), specifically from the downstream part (2.2) of each of the chambers (2) and is in fluid communication with the vacuum device (4).

More specifically, every vacuum line (6) comprises a valve (7).

In the embodiment shown in figure 1, the vacuum lines (6) converge into a common fluid line (9). A fluid line is a line, or pipe, able to convey a fluid.

The device comprises a vacuum valve (8) configured to open or close a fluid communication of the plurality of chambers (2) with the vacuum device (4) to allow vacuum to be applied to the plurality of chambers (2).

In the shown embodiment, the vacuum valve (8) is in fluid communication with the common fluid line (9).

The vacuum device (4) is additionally used to empty the set of vacuum lines (6) departing from the chambers (2) towards the Helium (He) detector (3). In the shown embodiment, a high vacuum pump is used to remove air and pre-condition the device. Accordingly, the device object of the invention measures only what passes through the specimen (100) during the measurement time, not what might have been accumulated in the vacuum lines (6).

The embodiment further comprises a detector valve (10) configured to open or close a fluid communication of the downstream part (2.2) of the plurality of the chambers (2) with the Helium detector (3) to test the specimens (100). The detector valve (10) is in fluid communication with the plurality of chambers (2) and with the Helium detector (3) to test the specimens (100). More specifically, the detector valve (8) is in fluid communication with the common fluid line (9).

In the embodiment disclosed in figure 1, the device object of the invention comprises a plurality of fluid lines (5). Each fluid line (5) comprises a first end in fluid communication with the pressurized Helium source (1) and a second end in fluid communication with the upstream part (2.1) of a chamber (2) of the plurality of chambers (2) through the plurality of inlets (20). Thus, the pressurized Helium from the Helium source (1) is able to enter a chamber (2) from a fluid line (5) of the plurality of fluid lines (5) though an inlet (20). In the chamber (2), the incoming Helium (He) will be in contact with a first side of the specimen (100).

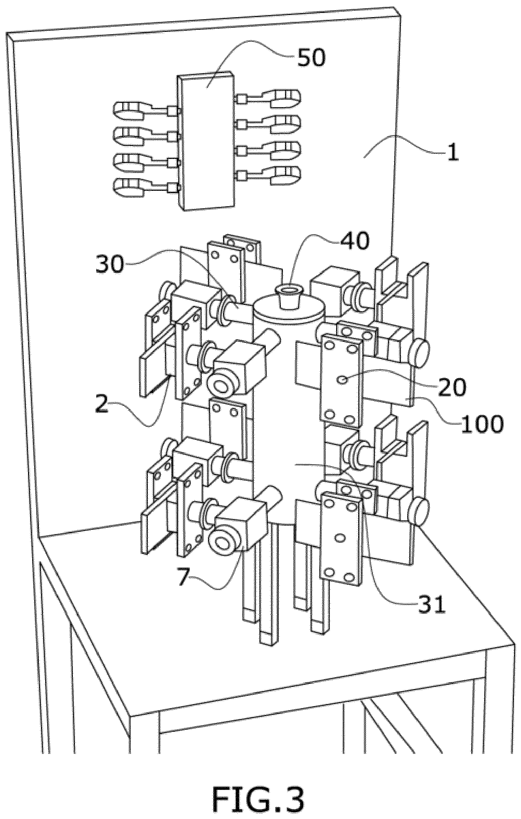

In the embodiment shown in figure 3, the fluid lines (5), not shown, would be connected through a container valve (50) to the Helium (He) source (1).

The device is made up of n number of chambers (2) for n specimens (100). Each chamber (2) may have a slot for inserting a specimen (100).

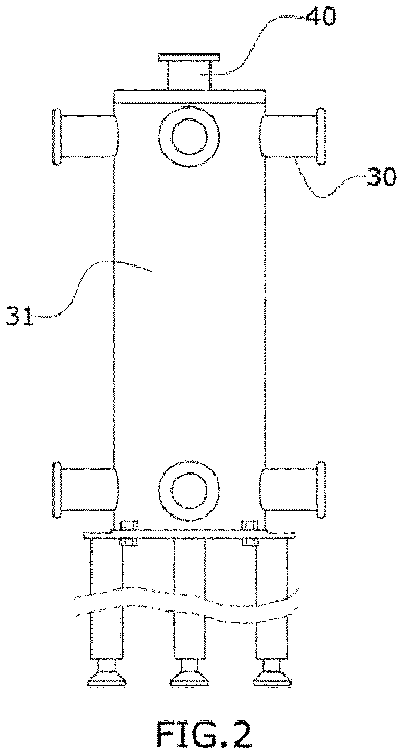

An embodiment of the invention with eight specimens (100) is depicted in figures 2 and 3. The shown device comprises a Helium container and a vacuum enclosure (31) with eight outlet ducts (30), one for each specimen (100) to be tested. Each outlet duct (30) comprises a valve (7). Furthermore, there are eight inlets (20) in the device.

The specimens (100) are flat.

Therefore, the embodiment comprises:
- a pressurized Helium (He) source (1), the pressurized Helium (He) source (1) connected to a container valve (50),
- eight chambers (2) in which a specimen (100) is inserted. Each chamber (2) being in fluid communication with an inlet (20).
- a vacuum device (3), not shown, in fluid communication with each chamber (2) through an outlet duct (30). The shown embodiment comprises a vacuum enclosure (31) and eight valves (7). The vacuum device (3) is connected to the chambers (2) through a connection port (40)
- a Helium detector (4), not shown, in fluid communication with each chamber (2) connected to them through the connection port (40).

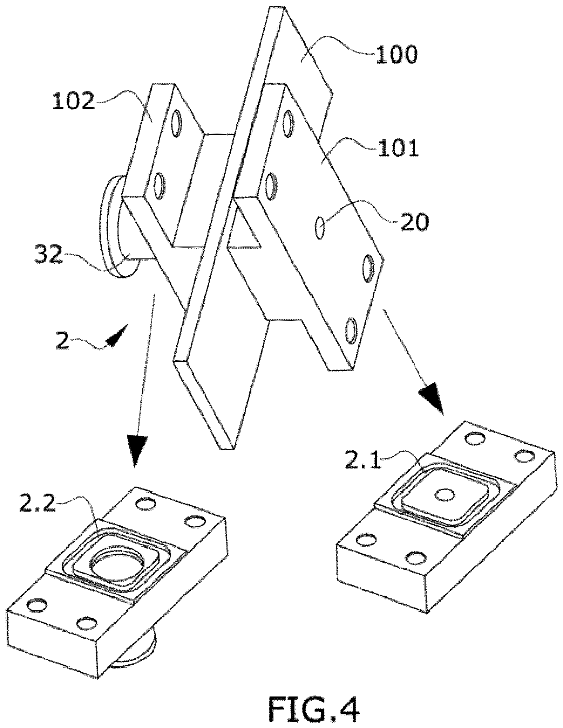

Figure 4 discloses a perspective view of a chamber (2) and a specimen (100) according to figure 3.

The chamber (2) receives the specimen (100) of the material to be tested that splits the chamber (2) into an upstream part (2.1) and a downstream part (2.2). Specifically, the specimen (100) is clamped between an upstream piece (101) and a downstream piece (102). Both pieces (101, 102) comprise an inner side located adjacent to the specimen (100) wherein the upstream part (2.1) and the downstream part (2.2) of the chamber (2) are carved.

The upstream piece (101) comprises an orifice which defines the inlet (20). The upstream part (2.1) of the chamber is in fluid communication with the inlet (20) such that pressurized Helium from the Helium source (1) is able to enter the upstream part (2.1) of the chamber (2).

The downstream piece (102) comprises a connection port (32) in fluid communication with the vacuum device (4) and the Helium detector (3), not shown. The connection port (32) is in fluid communication with the downstream part (2.2) of the chamber (2).

It is also an object of the invention a method further comprising the following sub-steps:
- sequentially performing the following sub-steps over each of the n specimens (100) for measuring the Helium leak of each specimen (100):
   ∘ applying vacuum to one of the chambers (2) by the vacuum device (3),
   ∘ putting in fluid communication said chamber (2) with the Helium (He) detector (4), and
   ∘ making a measurement of the Helium leak,
- repeating the above sub-steps after a period of time over each of the n specimens (100). In an embodiment the steps are repeated until the Helium leak measurement of each specimen (100) does no longer vary with time.

In an embodiment, before repeating the sub-steps on the n specimens (100) the following step is also performed:
- making a measurement of the Helium leak and checking that said measurement is below a determined minimum value.

More specifically, all valves (7) are closed, and it is checked that Helium leak goes below to the minimum detectable value of the Helium (He) detector (3). This is used to ensure that the downstream fluid lines (6, 9) are empty before any valve (7) is open for measurement.

In another embodiment, the method comprises the following step after measuring the Helium leak of each specimen (100) of the n specimens (100):
- applying vacuum to the n chambers (2) by the vacuum device (3) before the measurement of the next specimen (100) is performed.

It ensures that Helium (He) measured on test does not result from the leak of a valve (7), and it ensures that minimal pressure is always applied on the downstream side of the specimens in order to keep a Helium (He) flow in the specimen meanwhile measurement is made on the other specimens.

More specifically all valves (7) are opened, and vacuum is made in the downstream half of the device, i.e., the fluid lines (6, 9) before valves (7) are closed, except one, and the measurement is made on one specimen (100). It ensures that the fluid lines (6, 9) downstream the specimen (100) is empty before testing. It avoids the measurement of gas that has been accumulated downstream the specimen (100) due to previous measurement on this specimen (100). It is also used to check there is no leak.

Tests showing the functionality of the device are also performed. These tests may include:
- Leak testing of the whole device to eliminate all leaks of gas which are not due the specimen material itself, like leak testing valves, fluid lines and O-rings.
- Measurements of the permeability with all valves (7) opened and measurement of the permeability through each specimen (100). Checking that the total leak is equal to the sum of all individual leaks.

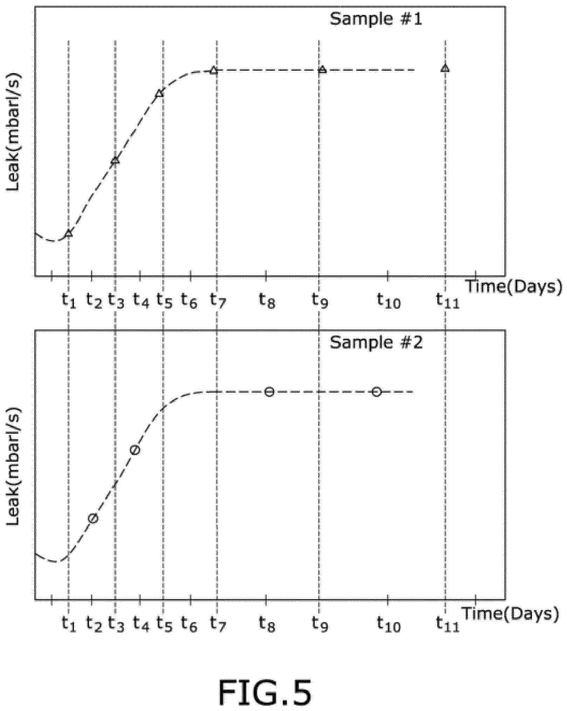

Figure 5 shows an illustration of how the measurements are made one after another on different specimens placed in the same device.

As can be seen in figure 5, the measurements are performed sequentially on each specimen (100), not simultaneously, at different sequential times t₁, t₂, t₃, ... However, an overall curve is obtained for each specimen (100).

## Claims

1. Device for testing permeability of materials, **characterized in that** it comprises:
- a plurality of inlets (20) adapted to be connected to a pressurized Helium source (1),
- a plurality of chambers (2), each chamber (2) adapted to receive a specimen (100) of a material to be tested, the chamber (2) adapted to be split by the specimen (100) into at least an upstream part (2.1) and a downstream part (2.2), each chamber (2) being in fluid communication with an inlet (20) of the plurality of inlets (20) such that pressurized Helium from the Helium source (1) is able to enter the upstream part (2.1) of each chamber (2) of the plurality of chambers (2),
- a vacuum device (4), in fluid communication with each chamber (2) of the plurality of chambers (2) and configured to provide vacuum to the downstream part (2.2) of each chamber (2) of the plurality of chambers (2),
- a Helium detector (3), in fluid communication with each chamber (2) of the plurality of chambers (2) and configured to detect Helium in the downstream part (2.2) of the plurality of chambers (2).

2. .- Device for testing permeability of materials, according to claim 1, wherein it comprises a plurality of valves (7), each valve (7) configured to open or close a fluid communication of a downstream part (2.2) of a chamber (2) of the plurality of chambers (2) with the Helium detector (3) to choose which specimen or specimens (100) are to be tested.

3. .- Device for testing permeability of materials, according to any preceding claim, wherein it comprises a set of vacuum lines (6), each vacuum line (6) departing from the downstream part (2.2) of each chamber (2) of the plurality of chambers (2) and being in fluid communication with the vacuum device (4).

4. .- Device for testing permeability of materials, according to claims 2 and 3, wherein each vacuum line (6) comprises at least one valve (7).

5. .- Device for testing permeability of materials, according to claim 3, wherein the plurality of vacuum lines (6) converges into a common fluid line (9).

6. .- Device for testing permeability of materials, according to any preceding claim, wherein it comprises a vacuum valve (8) configured to open or close a fluid communication of the plurality of chambers (2) with the vacuum device (4) to allow vacuum to be applied to the plurality of chambers (2).

7. .- Device for testing permeability of materials, according to claims 5 y 6, wherein the vacuum valve (8) is in fluid communication with the common fluid line (9).

8. .- Device for testing permeability of materials, according to any preceding claim, wherein it comprises a detector valve (10) configured to open or close a fluid communication of the downstream part (2.2) of the chambers (2) with the Helium detector (3) to test the specimens (100).

9. .- Device for testing permeability of materials, according to claims 5 and 8, wherein the detector valve (10) is in fluid communication with the common fluid line (9).

10. .- Device for testing permeability of materials, according to any preceding claim, wherein it comprises an upstream piece (101) and a downstream piece (102) configured to clamp the specimen (100) in between, the sides of the upstream piece (101) and of the downstream piece (102) configured to be adjacent to the specimen (100) having carved the upstream part (2.1) and downstream part (2.2) of the chamber.

11. .- Method for testing permeability of materials, the method comprising the following steps:
- providing a pressurized Helium source (1),
- connecting the pressurized Helium source (1) to a plurality of inlets (20) of a device for testing permeability of materials, the device further comprising a plurality of chambers (2), each chamber (2) adapted to receive a specimen (100) of a material to be tested, the specimen (100) configured to split the chamber (2) into at least an upstream part (2.1) and a downstream part (2.2), each chamber (2) of the plurality of chambers (2) being in fluid communication with an inlet (20) adapted to be connected to the pressurized Helium source (1) such that pressurized Helium from the Helium source (1) is able to enter the upstream part (2.1) of the chamber (2) of the plurality of chambers (2),
- providing a vacuum device (4), in fluid communication with each chamber (2) of the plurality of chambers (2) and configured to provide vacuum to the downstream part (2.2) of each chamber (2) of the plurality of chambers (2),
- providing a Helium detector (3), in fluid communication with each chamber (2) of the plurality of chambers (2) and configured to detect Helium in the downstream part (2.2) of the chamber (2),
- inserting a number of specimens (100) in a number of chambers (2),
the method further comprising the following sub-steps:
∘ applying vacuum to at least one chamber (2) of the plurality of chambers (2) by the vacuum device (3),
∘ putting in fluid communication said chamber (2) with the Helium detector (4), and
∘ making a measurement with the Helium detector (3),
- repeating the above sub-steps after a period of time over each of the specimens (100).

12. .- Method for testing permeability of materials, according to claim 11, wherein it comprises the following step after testing the permeability of each specimen (100) being the plurality of chambers (2) in fluid communication with the Helium detector (3):
- applying vacuum to the plurality of chambers (2) by the vacuum device (3) before the measurement of the next specimen (100) is performed.

13. .- Method for testing permeability of materials, according to claim 11 or 12, wherein before repeating the sub-steps on the plurality of specimens (100) the following steps are performed:
- making a measurement of the permeability, and
- checking whether said measurement is below a determined minimum value.
